# EUROPEAN PATENT APPLICATION

(11) **EP 4 825 825 A1**
(43) Date of publication of application: **21.10.2026**
(21) Application number: 25382390.0
(22) Date of filing: 15.04.2025
(51) Int. Cl.: C04B 30/02, C04B 30/00, C04B 14/06

(54) **THERMAL INSULATING BOARD FOR THE BUILDING INDUSTRY**

(71) Applicant: EIKA, S.COOP., 48277 Etxebarria (ES)
(72) Inventor: URKIJO SOLATXI, Amets, 48970 BASAURI (ES); DE LOS TOYOS LOPEZ, Daniel, 48277 ETXEBARRIA (ES)
(74) Representative: Galbaian S.Coop.

(57) **Abstract**

Thermal insulation board for the building industry, comprising at least one substrate (1) of microporous material comprising hydrophobic fumed silica particles and, in addition, hydrophilic fumed silica particles. The weight ratio between the hydrophobic fumed silica particles and the hydrophilic fumed silica particles is between 1:3 and 3:1 so that a non-combustible substrate (1) is obtained.

## Description

### TECHNICAL FIELD

The present invention relates to thermal insulating boards for the building industry.

### PRIOR ART

Microporous materials consisting mainly of pressed fumed silica particles are known to be used as thermal insulators due to their very low thermal conductivity. Although fumed silica particles are usually hydrophilic and can become damaged if they absorb too much moisture, processes are known that convert hydrophilic fumed silica particles into hydrophobic fumed silica particles by adding organosilanes so that they can repel water, as disclosed in EP0032176A1.

Thermal insulation boards for the building industry are also known which comprise a substrate of microporous material with hydrophobic fumed silica particles to repel water. For example, EP2204513A2 discloses a thermal insulating board comprising such a substrate disposed between layers of rock wool to form a non-combustible, water-repellent thermal insulating board.

### DISCLOSURE OF THE INVENTION

The object of the invention is to provide a thermal insulating board for the building industry, as defined in the claims.

The thermal insulating board of the invention comprises at least one substrate of microporous material comprising hydrophobic fumed silica particles and, in addition, hydrophilic fumed silica particles, wherein the weight ratio between the hydrophobic fumed silica particles and the hydrophilic fumed silica particles is between 1:3 and 3:1, so that a non-combustible substrate is obtained.

This results in a board that is a good thermal insulator, non-combustible and with good resistance to moisture absorption, whether or not the substrate is coated with an insulating, non-combustible, water-repellent coating, or whether it comprises a coating that has already been torn.

The thermal insulating boards of the prior art, as the substrate of microporous material is formed with only hydrophobic fumed silica particles, provide substrates with very good thermal insulation and water repellent, but if such substrates are not protected with non-combustible coatings, as with a top and bottom layers of rock wool, it has been seen that they may combust due to the high content of organic compounds associated with the hydrophobic fumed silica particles of the substrate which are combustible. However, in the thermal insulating board of the invention only with the substrate of microporous material combining the hydrophobic fumed silica with the hydrophilic fumed silica in the indicated weight ratio and without the need of any coating, the thermal insulating board being a good thermal insulator, non-combustible and with good resistance to moisture absorption is achieved by maintaining the total amount of fumed silica particles, limiting the amount of hydrophilic silica particles, and ensuring a minimum amount of hydrophobic silica particles so that overall, the substrate has sufficient water repellency. By limiting the maximum amount of hydrophobic silica particles in the substrate, the amount of organic compounds associated with these particles is limited so that, overall, the substrate is non-combustible, which means that it maintains a fire protection rating appropriate to its application.

In addition, limiting the maximum amount of hydrophobic fumed silica particles also reduces the damping of the material favouring the compactness of the substrate.

These and other advantages and features of the invention will become apparent in view of the figures and the detailed description of the invention.

### DESCRIPTION OF DRAWINGS

Figure 1 shows a perspective view of a first embodiment of a thermal insulating board according to the invention
Figure 2 shows a sectioned view of a second embodiment of the thermal insulation board according to the invention.
Figure 3 shows a sectioned view of a third embodiment of the thermal insulation board according to the invention.

### DETAILED DISCLOSURE OF THE INVENTION

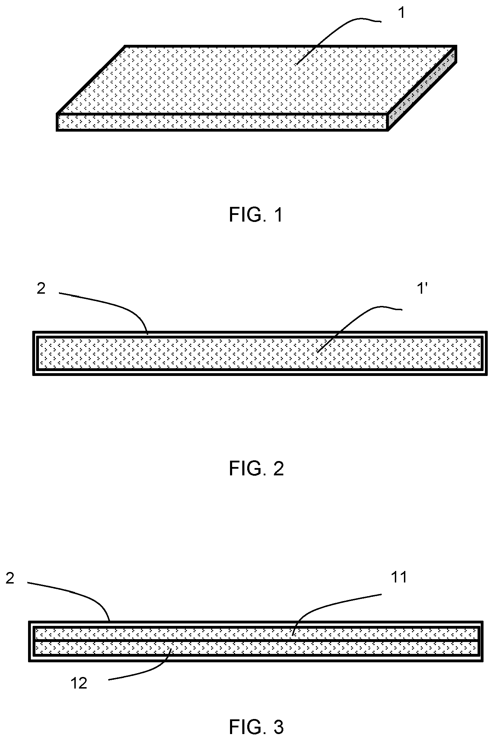

The thermal insulating board for the building industry according to the invention comprises at least one substrate 1; 1'; 11,12, preferably pressed, of microporous material comprising hydrophobic fumed silica particles and, in addition, hydrophilic fumed silica particles. The weight ratio between the hydrophobic fumed silica particles and the hydrophilic fumed silica particles is between 1:3 and 3:1, so that a non-combustible, easily compressible substrate 1; 1'; 11, 12 is obtained with adequate thermal insulation. In this way, a thermal insulating board for the building industry is obtained which is a good thermal insulator, non-combustible and with good resistance to moisture absorption, even if the substrate is not coated with any insulating, non-combustible, water-repellent coating, as is the case in the embodiment shown in figure 1, or even if it comprises a coating which is torn.

In the context of the invention the term "non-combustible substrate" refers to the substrate having a low reaction to fire, so that, under normal operating conditions, it does not allow the thermal insulating board to combust. In applications of thermal insulating boards for building, a material is considered to have a low reaction to fire when it has a reaction to fire in category A, that is, categories A1 or A2, according to the UNE-EN-ISO 1182 and UNE-EN ISO 1716 standards, which are included in the UNE-EN-ISO 13501 standard, category A1 being the most restrictive.

In the context of the invention the expression "a good resistance to moisture absorption" refers to the fact that the thermal insulation board, exposed to conditions of high humidity and high temperatures, does not absorb more than 1% by weight of moisture

In a preferred embodiment, the weight ratio between hydrophobic fumed silica particles and hydrophilic fumed silica particles is between 2:3 and 3:2, more preferably 1:1. This results in a thermal insulation board for the building industry with even lower reaction to fire and higher resistance to moisture absorption that does not combust or become damaged even in extreme conditions such as very humid climates and adverse fire exposures.

In an embodiment, the substrate 1; 1'; 11,12 comprises between 50% and 90% by weight of fumed silica particles. In this way, good thermal insulation properties are ensured.

In an embodiment, the substrate 1; 1'; 11,12 further comprises an opacifier, preferably, in a weight percentage of between 15% and 45%, and fibres, preferably, in a weight percentage of between 1% and 5%. The fibres reinforce the substrate 1; 1'; 11,12 providing good mechanical strength. The opacifier is used to prevent the transmission of thermal radiation. Thermal radiation is the energy emitted and transferred at a distance between bodies simply because of their thermal state. This radiation does not require matter to be transferred and can propagate through the vacuum. The function of opacifiers, with a controlled particle size distribution, is to scatter infrared radiation, thus reducing the transmission of thermal radiation to a minimum.

The opacifier can be silicon carbide, titanium dioxide, zirconium silicate or carbon black. Silicon carbide as an opacifier is especially advantageous because it has better opacifying properties compared to the other opacifiers. For example, compared to titanium oxide, silicon carbide has a specific effective extinction coefficient value at a temperature of 827 °C of 163.7%

The fibres can be silica fibres, inorganic metal oxide fibres, alumina fibres, aluminium silicate fibres, or aluminium and/or silicon dioxide ceramic fibres. Silica fibres are particularly advantageous because they are good insulators, both thermally and electrically. In addition, if a suitable chemical and thermal treatment is applied to the glass fibres, they are transformed into almost chemically pure silica fibres (98% SiO2). The products thus obtained are flexible and retain their mechanical strength up to 850°C, and can withstand continuous exposure to temperatures above 1,200°C.

In an embodiment, the substrate 1; 1'; 11,12 further comprises a filler material in a weight percentage between 10 and 25%, the filler material preferably being alumina, wollastonite, kaolin, precipitated silica or vermiculite. In this way, the filler material makes it possible to improve the mechanical properties of the substrate 1; 11,12.

In an embodiment, the substrate 1; 1'; 11,12 has a density of between 270 and 370 kg/m³. Thus, optimum thermal insulation of the thermal insulation board for building applications is achieved while maintaining easy handling of the board.

In an embodiment the thermal insulating board comprises a coating 2 formed by a film wrapping the substrate 1'; 11,12, as shown in figures 2 and 3. The substrate 1; 11,12 is preferably entirely coated by the coating 2. In the context of the invention, a film is a thin foil of a thickness of less than 1 mm. Thus, due to its low thickness, the coating 2 does not alter the characteristics of the thermal insulating board relating to thermal insulation or reaction to fire, and allows to protect the external surface of the substrate 1'; 11,12 from impacts, providing to the external surface of the substrate 1'; 11,12 a mechanical resistance which prevents its mechanical erosion by handling thereof in building applications, where the handling conditions are relatively demanding. Thus, the coating 2 permits easier handling of the thermal insulating board of the invention with less dense substrates 1'; 11,12 than without any coating, thereby reducing the manufacturing cost and environmental impact of its manufacture and use. This reduction in density also results in better thermal insulation.

A suitable coating 2 for the thermal insulating board of the invention is an aluminium or fibreglass film. The aluminium film is particularly advantageous because it is lightweight, provides very good mechanical strength and also protects from environmental conditions further improving the resistance to moisture absorption of the thermal insulating board of the invention.

In an embodiment, the coating 2 is bonded to the substrate 1'; 11,12 by means of a ceramic adhesive. In this way, the ceramic adhesive in addition to bonding the coating 2 to the substrate 1'; 11,12, hardens the external surface of the substrate 1'; 11,12, giving it additional mechanical strength to that provided by the coating 2 itself.

Preferably the coating 2 has a thickness of between 20 and 500 µm, more preferably 30 µm.

In the embodiment shown in figure 1, the thermal insulation board comprises a single substrate 1 which is not coated by any coating, the substrate 1 preferably having a density of 370 kg/m³ so that it can be easily handled.

In the embodiment shown in figure 2, the thermal insulating board comprises a single substrate 1' which is coated by the coating 2 formed by a film, which allows the substrate 1' to have a relatively lower density than the substrate 1 shown in figure 1 so that it can be easily handled, e.g. 270 kg/m³. In this way, the thermal insulating board obtained provides greater thermal insulation.

The thermal insulating board of the embodiments shown in figures 1 and 2 preferably has a length of at least 1000 mm, a width of at least 600 mm and a thickness between 10 and 50 mm.

In a third embodiment, shown in figure 3, the thermal insulating board comprises two substrates 11 and 12 stacked, i.e. one on top of the other, the free surfaces of the two substrates 11 and 12 being coated by the coating 2. In this way, thermal insulating boards with a thickness of more than 50 mm are obtained from two substrates 11 and 12, preferably pressed, of relatively low thicknesses. Moreover, as the two substrates 11 and 12 are coated with the same coating 2 instead of having a separate coating for each substrate, a compact and thermally optimized realization is achieved

Although in the third embodiment, the thermal insulating board comprises only two stacked substrates, in other embodiments the thermal insulating board may comprise a plurality of stacked substrates. Moreover, the substrates, in turn, may be bonded together by means of adhesives to prevent slippage

The thermal insulating board according to the invention has preferably a reaction to fire of category A1 according to the standards UNE-EN-ISO 1182 and UNE-EN ISO 1716 which are included in the standard UNE-EN-ISO 13501.

In a preferred embodiment the thermal insulating board has a thermal conductivity at 10°C of between 20 mW/(m·K) and 30 mW/(m·K) according to ISO 8302 or ASTM C177 standards.

## Claims

1. Thermal insulation board for the building industry, comprising at least one substrate (1; 1'; 11,12) of microporous material comprising hydrophobic fumed silica particles, **characterised in that** the substrate (1; 1'; 11,12) further comprises hydrophilic fumed silica particles, the weight ratio between the hydrophobic fumed silica particles and the hydrophilic fumed silica particles being between 1:3 to 3:1, so that a non-combustible substrate (1; 1'; 11, 12) is obtained.

2. Thermal insulation board according to claim 1, wherein the weight ratio between hydrophobic fumed silica particles and hydrophilic fumed silica particles is between 2:3 and 3:2, preferably being 1:1.

3. Thermal insulation board according to claim 1 or 2, wherein the substrate (1; 1'; 11,12) comprises between 50% and 90% by weight of fumed silica particles.

4. Thermal insulation board according to any of claims 1 to 3, wherein the substrate (1; 11,12) further comprises an opacifier in a weight percentage of between 15% and 45%, and fibres in a weight percentage of between 1% and 5%.

5. Thermal insulation board according to the preceding claim, wherein the opacifier is silicon carbide, titanium dioxide, zirconium silicate or carbon black.

6. Thermal insulation board according to claim 4 or 5, wherein the fibres are silica fibres, inorganic metal oxide fibres, alumina fibres, aluminium silicate fibres or aluminium ceramic fibres and/or silicon dioxide.

7. Thermal insulating board according to any of the preceding claims, wherein the substrate (1; 1'; 11,12) further comprises a filler material in a weight percentage of between 10% and 25%, the filler material preferably being alumina, wollastonite, kaolin, precipitated silica or vermiculite.

8. Thermal insulation board according to any of the preceding claims, wherein the substrate (1; 1'; 11,12) has a density of between 270 and 370 kg/m³ .

9. Thermal insulating board according to any of the preceding claims, comprising a coating (2) formed by a film wrapping the substrate (1'; 11,12), the substrate (1'; 11,12) being preferably entirely coated by the coating (2).

10. Thermal insulating board according to the preceding claim, wherein the coating (2) is made of aluminium or fibreglass.

11. Thermal insulation board according to claim 9 or 10, wherein the coating (2) is bonded to the substrate (1'; 11,12) by means of a ceramic adhesive.

12. Thermal insulation board according to any of claims 9 to 11, wherein the coating (2) has a thickness of between 20 and 500 µm, preferably 30 µm.

13. Thermal insulation board according to any of claims 9 to 12, comprising several substrates (11,12) stacked, preferably two substrates, the substrates (11,12) being coated by the coating (2).

14. Thermal insulating board according to any of the preceding claims, which has a reaction to fire of category A1 according to the standards UNE-EN-ISO 1182 and UNE-EN ISO 1716 which are included in the standard UNE-EN-ISO 13501.

15. Thermal insulation board according to any of the preceding claims, having a thermal conductivity at 10°C of between 20 mW/(m·K) and 30 mW/(m·K) according to ISO 8302 or ASTM C177 standards.
